# EUROPEAN PATENT APPLICATION

(11) **EP 4 589 199 A1**
(43) Date of publication of application: **23.07.2025**
(21) Application number: 25152238.9
(22) Date of filing: 16.01.2025
(51) Int. Cl.: F24D 3/08, F24H 4/02, F24H 8/00, F24H 15/219, F24H 15/227, F24H 15/238, F24H 15/32, F24H 15/33, F24H 15/345, F24H 15/36, F24H 15/385, F24H 9/00

(54) **HEATING APPARATUS WITH HIGH SEASONAL EFFICIENCY**

(30) Priority: 16.01.2024 IT 202400000669
(71) Applicant: Gas Point S.R.L., 42041 Brescello (RE) (IT)
(72) Inventor: ZATTI, Claudio, 42041 Brescello (RE) (IT)
(74) Representative: Studio Torta S.p.A.

(57) **Abstract**

A heating apparatus (1000) is described, with a condensing boiler (100) having an air-gas mixer (2), which partially defines a combustion cell (CELL), an air-water heat pump (200) comprising an evaporator (18), ventilation means (6), a bypass duct (23) arranged in parallel to the combustion cell and configured to enable the air coming from the ventilation means to partially bypass the combustion cell and directly reach the evaporator and an air distribution device (24; 40) configured to vary the air flow coming from the ventilation means and directed towards the mixer and the evaporator, respectively, through the bypass duct.

## Description

### CROSS-REFERENCE TO RELATED APPLICATIONS

This patent application claims priority from Italian patent application no. 102024000000669 filed on January 16, 2024, the entire disclosure of which is incorporated herein by reference.

### TECHNICAL FIELD

This invention relates to a heating apparatus with high seasonal efficiency. The apparatus is preferably obtained by integrating a condensing boiler and an air-water heat pump.

### PRIOR ART

As is well known, heating apparatuses are essentially based on the use of water as a carrier for distributing heat to the terminals, normally radiators, that heat rooms. Water heating apparatuses used in both stand-alone heating systems, i.e. serving individual residential units, and central heating systems, i.e. serving several residential units, are predominantly powered by gaseous fuel. The most common apparatuses include condensing boilers, which have seasonal energy efficiencies of over 86% (around 93%) and low NOx emissions, in particular below 56 mg/kWh. Currently, the limit for seasonal efficiency is set by European legislation at 86%, but from 2040 only heating apparatuses with a seasonal efficiency of more than 100% may be placed on the market. Such an increase in the limit automatically excludes conventional condensing boilers from the market, in particular, boilers supplying energy exclusively from fuel gas, which cannot achieve seasonal efficiencies above 100%. As is well known, heat pumps have seasonal efficiencies that can easily exceed the 100% limit even though they have drawbacks that can be particularly disadvantageous. First of all, they are relatively bulky and characterised by rather high costs. In addition to this, they have a high thermal inertia that makes instantaneous domestic hot water production impossible; therefore, domestic hot water storage tanks need to be used, in which the hot water produced with the aid of additional heat exchangers is stored.

The patents EP1376025 and ITBO20120458 describe heating apparatuses of known types.

### SUMMARY OF THE INVENTION

The purpose of this invention, therefore, is to provide a heating apparatus, which is free of the drawbacks described above, which is easy and inexpensive to implement and which is capable of achieving a seasonal energy efficiency of more than 100%.

According to this invention, a heating apparatus with high seasonal efficiency is produced according to what is set forth in the attached claims.

### BRIEF DESCRIPTION OF THE DRAWINGS

For a better understanding of this invention, a preferred embodiment is described below by way of non-limiting example and with reference to the accompanying drawings, wherein:
- Figure 1 is a schematic view of a first embodiment of a heating apparatus produced in accordance with this invention;
- Figure 2 is a schematic view of a second embodiment of the heating apparatus according to Figure 1;
- Figure 3 is an enlarged view of a detail in Figure 1; and
- Figures 4 and 5 illustrate respective alternative embodiments of the detail in Figure 4.
- Figure 6 is an enlarged view of a detail in Figure 2; and
- Figures 7 and 8 illustrate respective alternative embodiments of the detail in Figure 6.

### DETAILED DESCRIPTION OF THE INVENTION

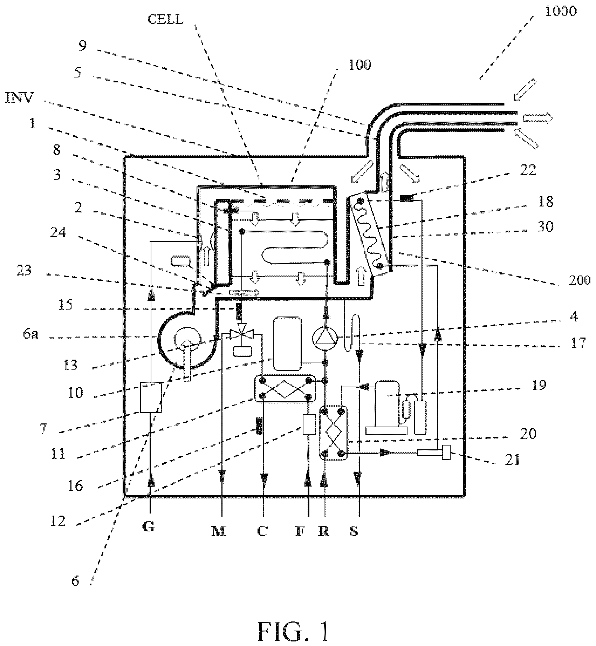

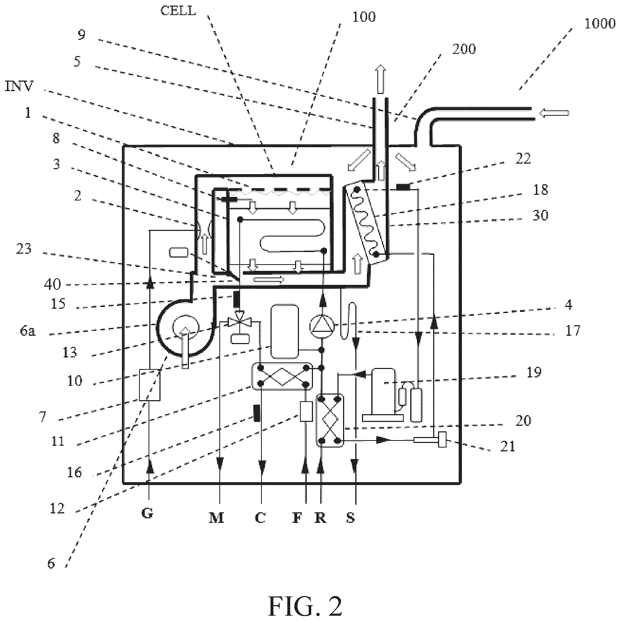

In Figures 1 and 2, the reference number 1000 denotes a heating apparatus comprising a condensing boiler 100 and a heat pump 200 connected with each other in such a way that they form an integral part of a single unit 1000. Advantageously, the apparatus 1000 comprises a casing INV containing the boiler 100, heat pump 200 and additional components of the apparatus 1000 as described in more detail in the following discussion.

With reference to the boiler 100, the latter includes at least the typical components of a condensing boiler. The boiler 100 thus comprises a total pre-mixing burner 1, an air-gas mixer 2 and a primary heat exchanger 3, which define a combustion cell CELL.

Specifically, the burner 1 allows the combustion of an air-gas mixture coming from the mixer 2, inside a combustion chamber of the heat exchanger 3. The mixer 2 is configured to mix the quantities of air and gas required to produce the energy required by the boiler 100 in a constant ratio. The heat exchanger 3 enables the exchange of heat between the combustion products generated by the burner 1 and water from a heating system driven by a pump 4 of a primary circuit of the boiler 100.

The combustion products generated by the burner 1 are expelled/conveyed outside the apparatus 1000 and the residential unit in which it is installed via an exhaust duct 5, thanks to the thrust generated by ventilation means 6 described in the following discussion. Advantageously, the apparatus 1000 comprises only one exhaust duct 5.

The boiler 100 also includes a gas valve 7 with a double shutter (one for safety and one for operation), which allows gas to flow to the burner 1 whenever there is a need to supply heat to said heating system.

The mixer 2 is preferably a Venturi mixing system, in which the velocity of the air passing through its minimum section generates a vacuum sufficient to draw gas from at least one hole formed at this minimum section in proportion to the air flow rate. Specifically, the gas valve 7 is pneumatically connected to the mixer 2 and provides a gas flow proportional to the pressure difference between the air inlet section and the minimum section of the mixer 2. According to a variant of this invention, not illustrated, the mixer 2 may be a mixing system of another type capable of supplying quantities of gas proportional to the air flow rate.

Advantageously, the boiler 100 also includes an ignition and flame detection device 8 configured to ignite the burner 1 and detect the presence of a flame.

The ventilation means 6 are preferably defined by a fan 6a that draws in air from the external environment via an intake duct 9 and sends it to the boiler 100 via the mixer 2. The fan 6a is preferably located upstream of the combustion cell CELL. Advantageously, the apparatus 1000 includes only one fan 6a. Advantageously, the apparatus 1000 comprises only one intake duct 9.

As shown in Figure 1, the intake duct 9 is concentric/coaxial to the exhaust duct 5.

As illustrated in Figure 2, the intake duct 9 is separated from the exhaust duct 5 and, in particular, arranged outside the exhaust duct 5.

Advantageously, the casing INV isolates the apparatus 1000 from the environment in which it is installed by placing it in communication with the external environment via the intake duct 9 and the exhaust duct 5.

Again with reference to Figures 1 and 2, the boiler 100 also includes an expansion vessel 10, which accommodates the expansion of water flowing into the heating system whenever its temperature increases.

The boiler 100 also includes a domestic water heat exchanger 11, which allows heat to be exchanged between the water in the primary circuit of the boiler 100 coming from the heat exchanger 3 and domestic water coming from a water mains via a cold water inlet F.

The boiler 100 includes a domestic water flow sensor 12, which detects the passage of water from the water mains through the inlet F when a user turns a hot water tap on. The boiler 100 includes a diverter valve 13, preferably a three-way one, which allows the diversion of water from the heat exchanger 3.

The boiler 100 includes a temperature sensor 15 for water coming from the heat exchanger 3 and a temperature sensor 16 for water coming from the domestic water heat exchanger 11. The boiler 100 also comprises a siphon 17 for collecting and expelling condensate from both the heat exchanger 3 and an evaporator 18 of the heat pump 200. The apparatus 1000 also comprises an electronic regulation and control card contained inside a control panel (not illustrated).

With reference to the heat pump 200, the latter is of the air-water type and heats the water in the primary circuit, which comes from the heating system via the duct R. The heat pump 200 comprises a compressor 19, an evaporator 18 and a condenser 20. The evaporator 18 is configured to allow the refrigerant to evaporate from the liquid phase to the gaseous phase by absorbing heat from the air coming from outside via the intake duct 9 and/or from the combustion products exiting the heat exchanger 3. Advantageously, the evaporator 18 is placed downstream of the heat exchanger 3.

The condenser 20 is configured to allow the refrigerant to condense from the gaseous phase to the liquid phase and transfer heat to the water returning from the heating system via the duct R.

The heat pump 200 comprises a metering valve 21, which determines the pressure drop necessary and sufficient to maintain the refrigerant at the working temperatures in the evaporator 18 and condenser 20.

The heat pump 200 includes a refrigerant temperature sensor 22, based on which the degree of opening of the metering valve 21 is determined. Advantageously, the ventilation means 6 also serve the heat pump 200. Advantageously, the fan 6a also serves the heat pump 200. The fan 6a is preferably located upstream of the combustion cell CELL and the evaporator 18.

The apparatus 1000 preferably includes a bypass duct 23.

As illustrated in Figures 1 and 2, the bypass duct 23 is arranged parallel to the combustion cell CELL and leads to the heat pump 200, specifically to the evaporator 18.

The bypass duct 23 is configured so that the air flow from the fan 6a partially bypasses the combustion cell CELL and is sent directly to the evaporator 18. The apparatus 1000 includes a valve 24 to distribute the air from the fan 6a. Specifically, the valve 24 is arranged upstream of the evaporator 18 and operating on the shutter 24b performs the function of sending air from the fan 6a to the combustion cell CELL via the bypass duct 23.

The valve 24 is preferably arranged along the bypass duct 23. As shown in Figure 1, the valve 24 can be placed at the inlet of the bypass duct 23. Alternatively, as shown in Figure 2, the valve 40 can be placed at the outlet of the bypass duct 23.

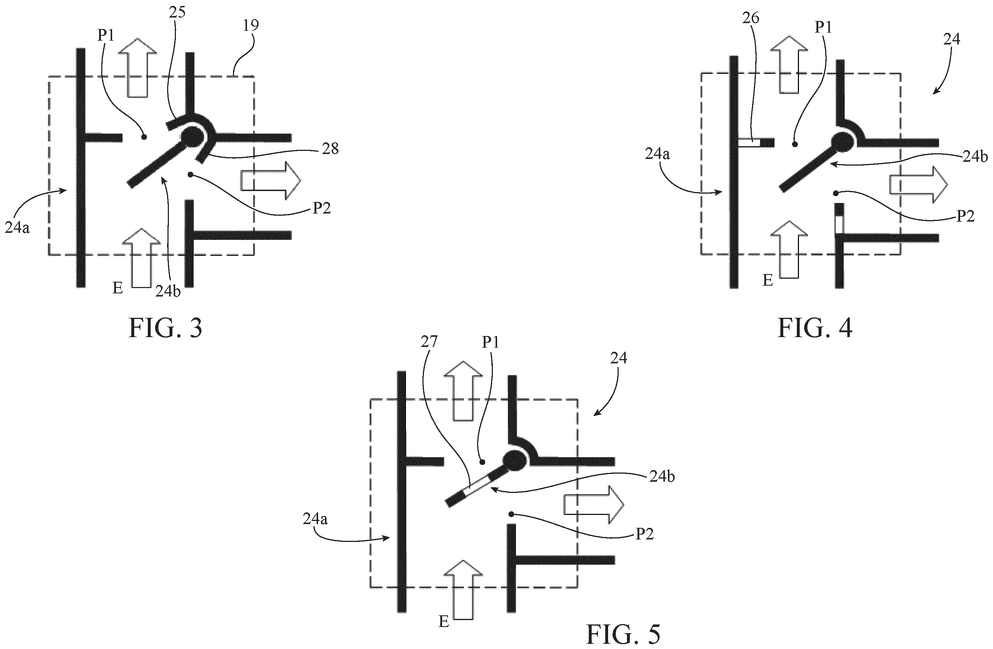

With particular reference to Figures 3 to 5, the valve 24 is a distribution valve for air from the fan 6a to the combustion cell CELL and to the evaporator 18. Advantageously, the valve 24 is a modulating valve configured to realise a gradual transition between two extreme configurations (as described in more detail in the following discussion). More specifically, the valve 24 is designed to be firmly arranged in any defined intermediate position between the two extreme configurations (as described in more detail in the following discussion). The valve 24 is preferably a three-way valve connected to the boiler 100, in particular to the combustion cell CELL and to the evaporator 18, via the bypass duct 23.

Specifically, the valve 24 has an air flow inlet E and an outlet P1, through which the air flow at least partially reaches the combustion cell CELL, and an outlet P2, through which the air flow at least partially reaches the evaporator 18. The valve 24 comprises a main body 24a and a shutter 24b mobile between two extreme configurations.

In a first extreme configuration, the shutter 24b is arranged so that the outlet P1 is completely closed except for a minimum flowing section (as described in more detail in the following discussion) and the outlet P2 is completely open. In the second extreme configuration, instead, the shutter 24b is arranged so that the outlet P1 is completely open and the outlet P2 is completely closed except for a possible minimum flowing section (as described in more detail in the following discussion). In the example shown in Figures 3 to 5, the shutter 24b is arranged in an intermediate position between the two extreme configurations. The valve 24 advantageously allows continuous variation of air flows through the bypass duct 23 and through the combustion cell CELL.

The valve 24 is configured to have a minimum flowing section of air flow towards the combustion cell CELL, such that it determines the value of the minimum heat flow to the burner 1 and contemporaneously a maximum air flowing section to the evaporator 18.

According to a first embodiment illustrated in Figure 3, the minimum flowing section of the valve 24 towards the combustion cell CELL is achieved by means of at least one stop element 25 limiting the movement of the shutter 24b towards the first extreme configuration. In other words, the presence of the stop element 25 blocks the movement of the shutter 24b towards the first extreme configuration, preventing it from completely closing the outlet P1. According to a second embodiment of this invention illustrated in Figure 4, the minimum flowing section of the valve 24 towards the combustion cell CELL is obtained through at least one through-hole 26 obtained through the main body 24a. The hole 26 is made through a wall of the main body 24a defining the outlet P1 (transverse to the direction of the air flow). The hole 26 therefore defines an air passage that is always open to the combustion cell CELL.

According to a third embodiment illustrated in Figure 5, the minimum flowing section of the valve 24 towards the combustion cell CELL is obtained through at least one through-hole 27 obtained through the shutter 24a. According to a fourth embodiment of this invention that is not illustrated, the minimum flowing section of the valve 24 towards the combustion cell CELL is obtained using any combination of the three embodiments just described. Advantageously, the minimum flowing section of the valve 24 to the combustion cell CELL as well as the maximum air flowing section of the valve 24 to the evaporator 18 allow the apparatus 1000 to achieve a seasonal efficiency of more than 100%.

Advantageously, the valve 24 is configured to have a maximum flowing section towards the combustion cell CELL, such that it determines the value of the maximum heat flow to the burner 1 and contemporaneously a minimum flowing section to the evaporator 18. The minimum flowing section of air flow to the evaporator 18 is preferably not zero.

According to a first embodiment illustrated in Figure 3, the maximum air flow through the valve 24 towards the combustion cell CELL is achieved by increasing the resistance to the passage of air towards the bypass duct 23 by means of at least one stop element 28 limiting the movement of the shutter 24b towards the second extreme configuration. In other words, the presence of the stop element 28 blocks the movement of the shutter 24b towards the second extreme configuration, preventing it from completely closing the outlet P2.

According to a second embodiment of this invention illustrated in Figure 4, the maximum air flow through the valve 24 towards the combustion cell CELL is obtained by increasing the resistance to the air flow towards the bypass duct 23 by means of at least one through-hole 29 obtained through the main body 24a. The hole 29 is made through a wall of the main body 24a defining the outlet P2 (transverse to the direction of the air flow). The hole 29 therefore defines an air passage that is always open to the evaporator 18.

According to a third embodiment illustrated in Figure 5, the maximum air flow through the valve 24 towards the combustion cell CELL is obtained by increasing the resistance to the air flow towards the bypass duct 23 by means of the through-hole 27 obtained through the shutter 24a.

According to a fourth embodiment that is not illustrated, the maximum flowing section of the valve 24 towards the combustion cell CELL is obtained using any combination of the three embodiments just described.

According to one embodiment of this invention, the ventilation means 6, in particular the fan 6a, are operated at a constant speed; and the amount of air sent to the combustion cell CELL and the bypass duct 23 is determined solely by the valve 24 and is controlled by varying the position of the shutter 24b in any of the intermediate positions between the two extreme configurations.

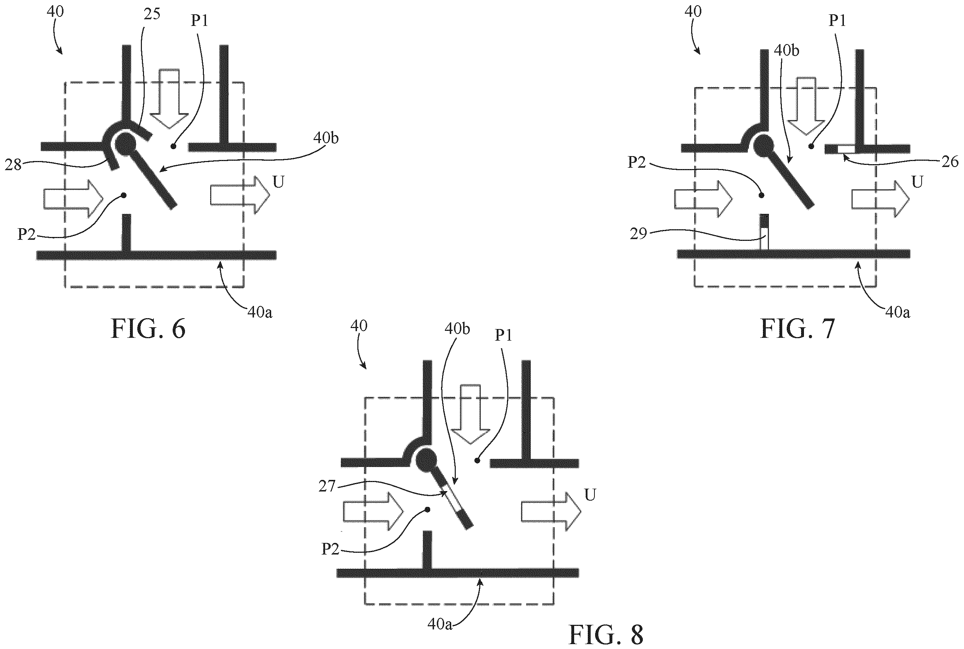

With particular reference to Figures 6 to 8, the valve 40 is, instead, a mixing valve for the flue gases coming from the combustion cell CELL with the air coming from the fan 6a. Advantageously, the valve 40 is a modulating valve configured to realise a gradual transition between two extreme configurations (as described in more detail in the following discussion). More specifically, the valve 40 is designed to be firmly arranged in any defined intermediate position between the two extreme configurations (as described in more detail in the following discussion). The valve 40 is preferably a three-way valve connected to the boiler 100, in particular to the combustion cell CELL, and to the evaporator 18, via the bypass duct 23.

Specifically, the valve 40 has an air and flue gas flow outlet U and an inlet P1, through which the flow of flue gases from the combustion cell CELL enters; and an inlet P2, through which the air flow from the bypass duct 23 enters. The valve 40 comprises a main body 40a and a shutter 40b mobile between two extreme configurations.

In a first extreme configuration, the shutter 40b is arranged so that the inlet P1 is completely closed except for a minimum flowing section (as described in more detail in the following discussion) and the inlet P2 is completely open. In the second extreme configuration, instead, the shutter 40b is arranged so that the inlet P1 is completely open and the inlet P2 is completely closed except for a minimum flowing section (as described in more detail in the following discussion). In the example shown in Figures 6 to 8, the shutter 40b is arranged in an intermediate position between the two extreme configurations. Advantageously, the valve 40 enables the air flow from the bypass duct 23 and the flow of flue gases from the combustion cell CELL to be varied continuously.

The valve 40 is configured to have a minimum flowing section of the flow of flue gases from the combustion cell CELL, such that it determines the value of the minimum heat flow to the burner 1 and contemporaneously a maximum flowing section of air to the evaporator 18.

According to a first embodiment illustrated in Figure 6, the minimum flowing section of the valve 40 from the combustion cell CELL is achieved by means of at least one stop element 25 limiting the movement of the shutter 40b towards the first extreme configuration. In other words, the presence of the stop element 25 blocks the movement of the shutter 40b towards the first extreme configuration, preventing it from completely closing the inlet P1.

According to a second embodiment of this invention illustrated in Figure 7, the minimum flowing section of the valve 40 from the combustion cell CELL is obtained through at least one through-hole 26 obtained through the main body 40a. The hole 26 is made through a wall of the main body 40a defining the inlet P1 (transverse to the direction of the flow of flue gases). The hole 26 therefore defines a passage of flue gases that is always open to the combustion cell CELL.

According to a third embodiment illustrated in Figure 8, the minimum flowing section of the valve 40 from the combustion cell CELL is obtained through at least one through-hole 27 obtained through the shutter 40b.

According to a fourth embodiment of this invention that is not illustrated, the minimum flowing section of the valve 40 from the combustion cell CELL is obtained using any combination of the three embodiments just described. Advantageously, the minimum flowing section of the valve 40 from the combustion cell CELL as well as the maximum air flowing section of the valve 40 to the evaporator 18 allows the apparatus 1000 to achieve a seasonal efficiency of more than 100%.

Advantageously, the valve 40 is configured to have a maximum flowing section from the combustion cell CELL, such that it determines the value of the minimum heat flow to the burner 1 and contemporaneously a minimum flowing section from the bypass 23 to the evaporator 18. The minimum flowing section of air flow to the evaporator 18 is preferably not zero. According to a first embodiment illustrated in Figure 6, the maximum flow of flue gases through the valve 40 from the combustion cell CELL is achieved by increasing the resistance to the passage of air from the bypass duct 23 by means of at least one stop element 28 limiting the movement of the shutter 40b towards second extreme configuration. In other words, the presence of the stop element 28 blocks the movement of the shutter 40b towards the second extreme configuration, preventing it from completely closing the inlet P2.

According to a second embodiment of this invention illustrated in Figure 7, the maximum flow of flue gases through the valve 40 from the combustion cell CELL is obtained by increasing the resistance to the air flow from the bypass duct 23 by means of at least one through-hole 29 obtained through the main body 40a. The hole 29 is made through a wall of the main body 40a defining the inlet P2 (transverse to the direction of the flow of flue gases). The hole 29 therefore defines an air passage that is always open to the evaporator 18.

According to a third embodiment illustrated in Figure 8, the maximum flow of flue gases through the valve 40 from the combustion cell CELL is obtained by increasing the resistance to the air flow from the bypass duct 23 by means of the through-hole 27 obtained through the shutter 40b. According to a fourth embodiment that is not illustrated, the maximum flowing section of the valve 40 from the combustion cell CELL is obtained using any combination of the three embodiments just described.

According to one embodiment of this invention, the ventilation means 6, in particular the fan 6a, are operated at a constant speed; and the amount of flue gases received from the combustion cell CELL and the amount of air received from the bypass duct 23 is determined solely by the valve 40 and is controlled by varying the position of the shutter 40b in any of the intermediate positions between the two extreme configurations. With reference to Figures 1 and 2, the apparatus 1000 includes a flue gas exhaust duct 30. The evaporator 18 is preferably housed along the flue gas exhaust duct 30 to recover the heat of the combustion products coming from the heat exchanger 3 or the mixture of combustion products and air coming from the bypass duct 23 via the valve 24.

The advantages afforded by the apparatus 1000 produced according to the precepts of this invention are apparent from an examination of the characteristics thereof. In terms of performance, the simultaneous operation of the boiler 100 and heat pump 200 allows a seasonal efficiency of 100% to be achieved and, by appropriately sizing the evaporator 18, fan 6a and valve flowing sections 24, 40, even higher than 100%. In terms of construction, the integration of the heat pump 200 and boiler 100 in a single casing using a single fan 6a, a single pump 4 and a single evaporator 18 and calibrated air and flue gas passages determined by calibrated holes 26, 27 and 29 and stops 25 and 28 reduces manufacturing costs by minimising the number of components required to perform the functions described, by simplifying the management of air flow rates to the combustion cell (and thus ultimately simplifying the management of the boiler's thermal flow rate) to the point of being able to work with the fan 6a at constant speed and simplifying the assembly of the apparatus 1000 being produced.

## Claims

1. A heating apparatus (1000) comprising a condensing boiler (100) having an air-gas mixer (2), which partially defines a combustion cell (CELL), an air-water heat pump (200) comprising an evaporator (18), ventilation means (6) and a bypass duct (23) arranged in parallel to the combustion cell; and a distribution or mixing device (24; 40) configured to direct the air flow coming from the ventilation means (6a); the heating apparatus is **characterized in that** said distribution or mixing device (24; 40) comprises a shutter (24b; 40b) movable and adjustable in all intermediate positions between a first extreme configuration, in which it is in a position of maximum opening along a first direction and of minimum opening, not zero, along a second direction, and a second extreme configuration, in which it is in a position of maximum opening along the second direction and of minimum opening, not zero, along the first direction; and vice versa.

2. The heating apparatus according to claim 1 and comprising a distribution device (24) having a first shutter (24b) mobile between a first extreme configuration, in which it is in a position of maximum opening towards the evaporator and of partial closure towards the mixer, and a second extreme configuration, in which it is in a position of maximum opening towards the mixer and of partial closure towards the evaporator, and vice versa.

3. The heating apparatus according to claim 1 or 2 and comprising a mixing device (40) having a second shutter (40b) movable between a first extreme configuration, in which it is in a position of maximum opening by the bypass duct (23) and of partial closure by the combustion cell (CELL), and a second extreme configuration, in which it is in a position of maximum opening by the combustion cell and of partial closure by the bypass duct, and vice versa.

4. The heating apparatus according to any one of the previous claims, wherein the minimum flowing sections are obtained by means of at least one respective stop element (25, 28) configured to limit the movement of the shutter (24b; 40b) towards the first or the second extreme configuration, respectively.

5. The heating apparatus according to any one of the previous claims, wherein the minimum flowing sections are obtained by means of at least one through hole (26, 29) made through a main body (24a, 40a) of the distribution device (24) or of the mixing device (40).

6. The heating apparatus according to any one of the previous claims, wherein the minimum flowing sections are obtained by means of at least one through hole (27) made through said shutter (24b; 40b).

7. The heating apparatus according to any one of the preceding claims and comprising a single casing enclosing, on the inside, at least both the boiler (100) and the heat pump (200).

8. The heating apparatus according to any one of the preceding claims and comprising a single air intake duct and/or a single exhaust duct for the combustion products and/or a single fan (6a) defining said ventilation means (6).

9. The heating apparatus according to any one of the preceding claims, wherein the ventilation means operate at a constant speed.
